# EUROPÄISCHE PATENTSCHRIFT

(11) **EP 3 569 353 B1**
(45) Veröffentlichungstag und Bekanntmachung des Hinweises auf die Patenterteilung: **11.03.2026**
(21) Anmeldenummer: 19169826.5
(22) Anmeldetag: 17.04.2019
(51) Int. Cl.: B23Q 1/58, B23Q 3/06, F15B 15/02, F15B 15/14, F15B 7/00

(54) **BETÄTIGUNGSVORRICHTUNG**
ACTUATION DEVICE
DISPOSITIF DE COMMANDE

(30) Priorität: 18.05.2018 DE 102018112033
(43) Veröffentlichungstag der Anmeldung: 20.11.2019
(73) Patentinhaber: TMD Friction Services GmbH, 51381 Leverkusen (DE)
(72) Erfinder: Hecht, Axel, 50769 Köln (DE); Stinn, Fabian, 51491 Overath (DE)
(74) Vertreter: Müller, Eckhard

(56) Entgegenhaltungen:
- EP-A2- 0 306 737
- DE-B- 1 244 514
- US-A1- 2002 144 752

## Beschreibung

Die Erfindung betrifft eine Betätigungsvorrichtung, mittels welcher insbesondere eine Vorrichtung zur Fixierung von Werkstücken betätigt werden kann.

Aus unterschiedlichen technischen Gebieten ist es bekannt, mechanische Vorrichtungen durch Einleitung einer Zug- bzw. einer Druckkraft mittels einer Betätigungsvorrichtung von einer vorgegebenen Stellung in eine andere vorgegebene Stellung zu überführen.

So ist aus der DE 10 2012 220 817 B3 eine Vorschubeinrichtung zur translatorischen Bewegung eines bandförmigen Werkstücks bekannt.

Aus der DE 10 2005 056 449 A1 ist eine Werkstückhaltervorrichtung und eine damit ausgestattete Bearbeitungsmaschine bekannt.

Aus der EP 0 306 737 A2 ist ein Aktuator bekannt, mit dessen Hilfe sich ein Glied in eine Druckrichtung bewegt, während sich ein anderes Glied in einer gegenläufigen Richtung bewegt. Der Aktuator ist fest in einem Gehäuse integriert

Die zum Überführen der mechanischen Vorrichtung von einer in die andere Stellung erforderliche Zug- oder Druckkraft kann mitunter vergleichsweise hoch sein. Eine diese Zug- oder Druckkraft abstützende Lagerung der mechanischen Vorrichtung fällt daher massiv aus und lässt sich nicht immer mit akzeptablem technischem und wirtschaftlichem Aufwand umsetzen.

Der vorliegenden Erfindung liegt daher die Aufgabe zugrunde, eine Betätigungsvorrichtung anzugeben, mittels welcher das Betätigen einer mechanischen Vorrichtung vollständig oder zumindest annähernd außenreaktionskraftfrei erfolgen kann.

Diese Aufgabe wird mit den Merkmalen des Anspruchs 1 gelöst. Vorteilhafte Ausgestaltungen der Erfindung ergeben sich aus den Unteransprüchen.

Erfindungsgemäß ist die Betätigungsvorrichtung zum Einleiten einer Zugkraft und einer dazu entgegengesetzten Druckkraft in eine Vorrichtung vorgesehen und weist wenigstens ein Zugglied zum Übertragen der Zugkraft auf die Vorrichtung und wenigstens ein Druckglied zum Übertragen der Druckkraft auf die Vorrichtung auf. Dabei sind das wenigstens eine Zugglied und das wenigstens eine Druckglied zur Erzeugung einer Relativbewegung, die der Bewegung des Zuggliedes und des Druckgliedes in entgegengesetzten Richtungen entspricht, über einen dazwischen schwimmend gelagerten Aktuator wirkverbunden.

Die Vorrichtung kann beispielsweise auf dem Gebiet der mechanischen Bearbeitung von Werkstücken, insbesondere bei der Fertigung von Bremsbelägen und den zugehörigen Belagträgerplatten in Form eines Werkstückhalters vorgesehen sein, in welchem ein darin eingelegtes Werkstück kraft- und/oder formschlüssig festlegbar ist.

Die erfindungsgemäße Ausgestaltung der Betätigungsvorrichtung hat sich insbesondere als vorteilhaft zur Betätigung der vorstehend beschriebenen Vorrichtung zum Spannen von Werkstücken erwiesen, die aus ihrem gespannten Zustand in den gelösten Zustand durch das Einleiten einer Zugkraft überführt wird, die als Rückzugskraft auf die Spannmittel wirkt. Mit der erfindungsgemäßen Betätigungsvorrichtung wird auf die andere Vorrichtung gleichzeitig eine entgegengesetzte Druckkraft ausgeübt, so dass die Vorrichtung, in die die Zugkraft und die entgegengesetzte Druckkraft eingeleitet wird, nach außen praktisch reaktionskraftfrei bleibt. Dadurch kann eine für die Vorrichtung vorgesehene Transporteinrichtung einfacher gestaltet werden, da diese keine der Rückholkraft entgegensetzte Reaktionskraft abstützen muss.

Das Grundprinzip der vorliegenden Erfindung beruht auf einer gegensinnigen Kopplung des Zugglieds durch ein Druckglied mittels eines dazwischen schwimmend gelagerten Aktuators, durch welchen die Relativpositionen zwischen Zugglied und Druckglied selbsttätig zueinander ausgerichtet werden.

Im vorliegenden Fall kann die Betätigungsvorrichtung Teil einer Bearbeitungsanlage bzw. Bearbeitungsstation zur mechanischen Bearbeitung von Werkstücken sein. Darin können eine oder mehrere Vorrichtungen zum Halten der Werkstücke verwendet werden. Eine Bearbeitungsstation kann beispielsweise mit der Betätigungsvorrichtung ausgestattet und mit einer Vorrichtung zum Spannen von Werkstücken gekoppelt sein, um ein Entnehmen oder Einsetzen eines Werkstücks zu ermöglichen.

Bevorzugt kann vorgesehen sein, dass der Aktuator zum Erzeugen einer linearen Bewegung ausgebildet ist. Dies hat sich als vorteilhaft erwiesen, da der Aktuator gleichzeitig eine Zugkraft und eine Druckkraft erzeugt. Beide Kräfte sind aufgrund der linearen Bewegung bereits parallel zueinander ausgerichtet sind und somit gegenläufig.

Ebenfalls als bevorzugt hat sich herausgestellt, dass das wenigstens eine Zugglied und das wenigstens eine Druckglied parallel verschieblich zueinander geführt werden. Auf diese Weise ist eine außenreaktionskraftfreie oder außenreaktionskraftarme Einleitung der Zug- bzw. Druckkräfte möglich.

Der Aktuator ist erfindungsgemäß nach wenigstens einem der folgenden Funktionsprinzipien betätigbar, nämlich pneumatisch, hydraulisch, magnetisch oder elektromechanisch. Eine pneumatische oder hydraulische Betätigung des Aktuators erweist sich im industriellen Umfeld als vorteilhaft, da bei großen Bearbeitungsanlagen in der Regel Anschlüsse für Druckluft oder Druckflüssigkeitsversorgungen vorhanden sind. Alternativ ist jedoch auch vorstellbar, dass der Aktuator magnetisch, beispielsweise in Form eines Elektromagneten oder elektromechanisch, beispielsweise in Form eines Spindeltriebs ausgebildet werden.

Bei pneumatischer oder hydraulischer Funktionsweise des Aktuators kann wenigstens ein Arbeitszylinder und wenigstens ein darin hydraulisch oder pneumatisch verschieblicher Arbeitskolben zum Erzeugen einer auf das wenigstens eine Zugglied und das wenigstens eine Druckglied wirkenden Relativbewegung vorgesehen sein. Die entsprechenden Kräfte und die damit einhergehenden Bewegungen können durch diese Ausgestaltung auf einfache Weise erzeugt werden, wobei gleichzeitig die an dem Zugglied und dem Druckglied anliegende Kraft sehr einfach über eine Einstellung des hydraulischen oder pneumatischen Druckes reguliert werden kann.

Erfindungsgemäß ist vorgesehen, dass der Aktuator mit wenigstens zwei gegenläufig in einem Aktuatorgehäuse beweglichen Aktuatorgliedern ausgebildet ist, wobei das eine Aktuatorglied mit dem wenigstens einen Zugglied und das andere Aktuatorglied mit dem wenigstens einen Druckglied gekoppelt ist. Auf diese Weise kann erreicht werden, dass das Aktuatorgehäuse selbst bei Betätigung des Aktuators nur eine relativ kleine Bewegung auf ihrer schwimmenden Lagerung ausführen muss, wohingegen die mit den Aktuatorgliedern verbundenen Zug- und Druckglieder eine größere Bewegung durchlaufen können. Dadurch erfolgt das Einleiten der Kräfte in die andere Vorrichtung noch sanfter. Außerdem kann die Strecke, entlang welcher der Aktuator schwimmend gelagert sein muss, kleiner ausfallen.

Bevorzugt kann bei einer hydraulischen oder pneumatischen Betätigungsweise des Aktuators vorgesehen sein, dass die wenigstens zwei gegenläufig in dem Aktuator beweglichen Aktuatorglieder als Arbeitskolben ausgebildet sind, die beweglich in dem als Arbeitszylinder ausgebildeten oder den wenigstens einen Arbeitszylinder aufweisenden Aktuatorgehäuse geführt sind, wobei der eine Kolben mit dem wenigstens einen Zugglied und der andere Arbeitskolben mit dem wenigstens einen Druckglied gekoppelt ist. Auf diese Weise lässt sich ein einziger auf den Aktuator wirkender Arbeitsdruck dazu verwenden, beide Arbeitskolben gleichzeitig mit demselben Druck, also bei gleicher Kolbenfläche auch mit der gleichen Kraft zu betätigen, so dass die Ansteuerung der Betätigungsvorrichtung besonders einfach ausfällt. Bei einer Ausgestaltung des Aktuators als magnetischer Aktuator kann vorgesehen sein, dass die Aktuatorglieder beispielsweise als zwei gleichartige Elektromagneten ausgebildet sind, die mit einem gemeinsamen Weicheisenkern gekoppelt sind. Beispielsweise kann vorgesehen sein, dass die Spulen dieser Elektromagnete in Reihe geschaltet werden, so dass durch beide Spulen derselbe Strom fließt und somit bei gleicher Windungszahl dieselbe magnetische Kraft erzeugt wird.

Bei einer Ausgestaltung des Aktuators als elektromechanischer Spindeltrieb ist denkbar, den Spindeltrieb mit zwei Spindeln auszustatten, deren Gewindezüge gegensinnig zueinander ausgebildet sind, so dass eine Betätigung eines dazwischenliegenden Elektromotors gleichzeitig eine Zugkraft und eine Druckkraft erzeugt.

Bei einem hydraulisch oder pneumatisch betätigten Aktuator kann vorgesehen sein, die gleichen hydraulisch- oder pneumatisch wirksamen Kolbenflächen zur Erzeugung der Zugkraft und der Druckkraft vorzusehen. Auf diese Weise kann sichergestellt werden, dass die Zugkräfte den Druckkräften betragsmäßig entsprechen, so dass eine außenreaktionskraftfreie oder zumindest außenreaktionsarme Einleitung der Zug- und Druckkräfte gewährleistet ist.

Erfindungsgemäß ist vorgesehen, dass der Aktuator zum Erreichen der schwimmenden Lagerung gegenüber einem Fundament linear verschieblich geführt ist, wobei das Fundament ortsfest gegenüber der Vorrichtung festgelegt ist, in die die Zug- bzw. Druckkraft eingeleitet werden soll. Dies hat sich als besonders vorteilhaft für die Verwendung der Betätigungsvorrichtung in einer Bearbeitungsanlage erwiesen, so dass eine Vorrichtung, in welche die Zug- bzw. Druckkräfte eingeleitet werden soll, nicht mit Kräften beaufschlagt wird, die zur Führung des Aktuators in seiner schwimmenden Lagerung dienen.

In weitere Ausgestaltung der Erfindung kann vorgesehen sein, dass der Aktuator zur Erzeugung entgegengesetzter Relativbewegungen zwischen dem wenigstens einem Zugglied und dem wenigstens einen Druckglied doppeltwirkend oder mit wenigstens einer Rückzugsfeder ausgebildet ist. Auf diese Weise kann die Betätigungsvorrichtung nicht nur zum Einleiten einer Zugkraft über das Zugglied und einer Druckkraft über das Druckglied, sondern auch zum Einleiten einer Druckkraft über das Zugglied und einer Zugkraft über das Druckglied verwendet werden. Dies erweist sich insbesondere dann als vorteilhaft, wenn die Vorrichtung, in die die Zug- bzw. Druckkräfte eingeleitet werden sollen, keine selbsttätige Rückstelleinrichtung aufweist. Eine Vorrichtung zur Fixierung von Werkstücken könnte beispielsweise federgetriebene Spannmittel aufweisen, die bei Loslassen selbsttätig eine bestimmte Stellung annehmen. Alternativ kann eine Vorrichtung zur Fixierung von Werkstücken auch Spannmittel aufweisen, die in unterschiedlichen Positionen positionier- und arretierbar sind, so dass eine entsprechende Betätigungsvorrichtung nicht nur eine Rückholkraft, sondern auch eine entgegengesetzte Stellkraft zur exakten Positionierung der Spannmittel aufbringen muss. Ein doppeltwirkender Aktuator kann die entsprechenden Zug- bzw. Druckkräfte in beide Richtungen aktiv aufbringen, bei hydraulischen oder pneumatischen Aktuatoren beispielsweise dann, wenn Arbeitszylinder- oder Arbeitskolben doppeltwirkend ausgebildet sind.

In einer einfacheren Ausgestaltung kann alternativ auch vorgesehen sein, dass die Bewegungen der Betätigungsvorrichtung in einer Richtung durch eine Rückholfeder bewirkt wird, die so vorgespannt ist, dass sie die entgegengesetzten Druck- und Zugkräfte aufbringen kann. Durch angepasste Betätigung des Aktuators mit einer kleineren Gegenkraft, beispielsweise durch Beaufschlagung mit einem kleineren Hydraulik- bzw. Pneumatikdruck können die durch die Rückholfeder aufgebrachten Druck- und Zugkräfte an den Zug- und Druckgliedern eingestellt werden.

In diesem Zusammenhang hat sich das allgemeine Prinzip, das wenigstens eine Zugglied ferner zum Übertragen einer Druckkraft und/oder das wenigstens eine Druckglied ferner zum Übertragen einer Zugkraft auszubilden, als vorteilhaft erwiesen. Hierzu kann beispielsweise vorgesehen sein, dass das jeweilige Zug- bzw. Druckglied nicht nur an der Vorrichtung zum Einleiten einer Kraft zur Anlage kommt, sondern ggf. eine formschlüssige oder kraftschlüssige Verbindung mit der Vorrichtung eingeht, sodass Kräfte in beiden Richtungen übertragbar sind.

Außerdem hat sich als besonders vorteilhaft erwiesen, dass wenigstens zwei Zugglieder vorgesehen sind, die bezogen auf das wenigstens eine Druckglied diametral gegenüber liegen, oder dass wenigstens zwei Druckglieder vorgesehen sind, die sich bezogen auf das wenigstens eine Zugglied diametral gegenüber liegen, oder dass wenigstens zwei Zugglieder und wenigstens zwei Druckglieder vorgesehen sind, die symmetrisch zueinander angeordnet sind derart, dass die Einleitung der Zug- und Druckkräfte im Wesentlichen frei von Drehmomenten erfolgt.

Die der Erfindung zugrundeliegende Aufgabe wird gemäß Anspruch 10 ferner durch eine Bearbeitungsanlage mit einer vorstehend beschriebenen Betätigungsvorrichtung sowie einer Vorrichtung zur Fixierung von Werkstücken für eine mechanisch Bearbeitung gelöst. Eine derartige Bearbeitungsanlage kann beispielsweise eine Bearbeitungsstraße zur Bearbeitung von Bremsbelägen oder Belagträgerplatten für die Herstellung von Bremsbelägen für Kraftfahrzeuge sein.

Eine solche Bearbeitungsanlage kann sich ferner dadurch auszeichnen, dass wenigstens eine Bearbeitungsstation zum mechanischen Bearbeiten eines in der Vorrichtung gehaltenen Werkstücks vorgesehen ist, in die die Vorrichtung mittels einer Transporteinrichtung zu- und abführbar ist. Zudem kann vorgesehen sein, dass die Bearbeitungsanlage eine wie die vorstehend beschriebene Rückholeinrichtung für ein Verschieben der Spannmittel zur Ruheposition aufweist. Auf diese Weise kann eine Vielzahl von erfindungsgemäßen Vorrichtungen gleichzeitig in einer Anlage verwendet werden.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung.

Es zeigen in schematischer Darstellung:
- Fig. 1: in einer perspektivischen Ansicht eine erste Ausführungsform einer Vorrichtung zur Fixierung von Werkstücken,
- Fig. 2: in einer perspektivischen Ansicht einen Teilausschnitt einer zweiten Ausführungsform der Vorrichtung zur Fixierung von Werkstücken,
- Fig. 3: eine perspektivische Rückansicht der Ausführungsform aus Fig. 2,
- Fig. 4: in einer perspektivischen Ansicht einer dritten Ausführungsform der Vorrichtung zur Fixierung von Werkstücken,
- Fig. 5: in einer perspektivischen Ansicht die Vorrichtung gemäß Fig. 4 zur Fixierung von Werkstücken,
- Fig. 6: eine schematische Schnittansicht der erfindungsgemäßen Vorrichtung aus den Fig. 4 und 5,
- Fig. 7: eine perspektivische Ansicht einer vierten Ausführungsform einer Vorrichtung zur Fixierung von Werkstücken,
- Fig. 8: eine Schnittdarstellung auf der Grundlage der Fig. 7,
- Fig. 9: eine Draufsicht auf die Vorrichtung nach den Fig. 7 und 8,
- Fig. 10: eine perspektivische Ansicht einer Bearbeitungsanlage mit einer erfindungsgemäßen Betätigungsvorrichtung,
- Fig. 11.: eine perspektivische Unteransicht der Vorrichtung gemäß Figur 1, und
- Fig. 12: eine perspektivische Ansicht einer erfindungsgemäßen Betätigungsvorrichtung.

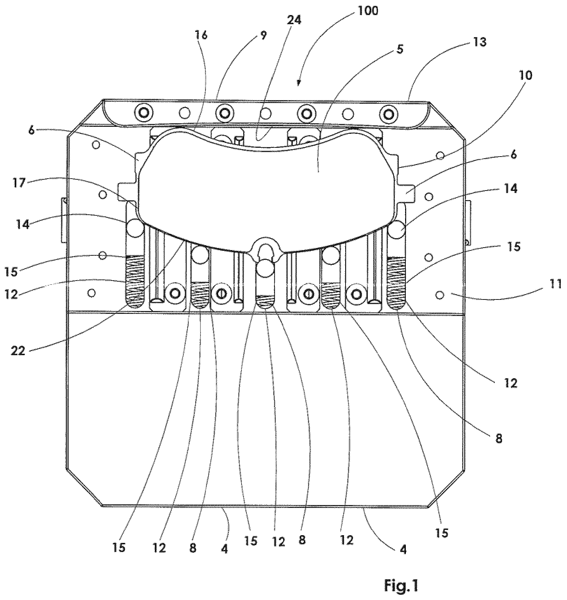

Fig. 1 zeigt eine Vorrichtung zur Fixierung von Werkstücken 10, die mit Bezugszeichen 100 versehen ist. Die Vorrichtung 100 dient dem Festspannen des Werkstücks 10. Bei dem Werkstück 10 handelt es sich beispielsweise um einen Bremsbelag, der eine Trägerplatte 6 und einen darauf befindlichen Reibbelag 5 aufweist sowie bogenförmig ausgebildet ist, d.h. er verfügt über zwei gegenüberliegende bogenförmige Seitenteile 16, 17 und zwei gegenüberliegende gerade Seitenteile.

Die Vorrichtung 100 umfasst eine Einspannauflage 11, die wie die übrigen Bestandteile der Vorrichtung 100 aus Metall gebildet ist. Die rechteckförmige Einspannauflage 11 ist eben ausgebildet und definiert den Bereich der Vorrichtung 100, auf dem das Werkstück 10 platzierbar und einspannbar ist. Innerhalb der Einspannauflage 11 sind Spannmittelführungen 12 ausgebildet, d.h. Längsöffnungen, die sich innerhalb der Einspannauflage 11 erstrecken. Die Spannmittelführungen 12 sind parallel und beabstandet zueinander angeordnet. Sie erstrecken sich über einen Teilbereich der Einspannauflage 11 und sind beabstandet zu einem Anschlag 13 angeordnet. Der Anschlag 13 erstreckt sich entlang der Stirnkante der Vorrichtung 100. Der Anschlag 13 hat die Form einer Leiste, d.h. eines geraden, schmalen, langen Bauteils, das auf der Vorrichtung 100 aufliegt und mit dieser fest oder lösbar verbunden ist. Der mit der Vorrichtung 100 verbundene Anschlag 13 ist mit der Vorrichtung 100 verschraubt, d.h. auswechselbar. Somit kann ein passender Anschlag 13 für unterschiedliche Werkstücktypen verwendet werden.

Wie aus Fig. 1 weiter hervorgeht, weist die Vorrichtung 100 Spannmittel 14 auf, die innerhalb der Spannmittelführungen 12 in Längsrichtung der Spannmittelführungen 12 verschiebbar und aus Metall gebildet sind. Die Spannmittel 14 erstrecken sich in ihrer Längsrichtung durch die Spannmittelführungen 12 und relativ zum Werkstück 10 nach oben, d. h. die Spannmittel 14 stehen von der Einspannauflage 11 vor und sind etwa zylinderförmig bzw. leicht konisch sowie einteilig ausgebildet. Die beiden Enden einer Spannmittelführung 12 weisen eine zu dem Spannmittel 14 korrespondierende Form auf, d.h. sie sind bogenförmig ausgebildet, wobei in Fig. 1 nur ein bogenförmiges Ende 8 zeichnerisch dargestellt ist. Unterhalb der Einspannauflage 11 erstrecken sich, wie Fig. 1 weiter verdeutlicht, in Längsrichtung der Spannmittelführungen 12 Federelemente 15, die an einem ihrer Enden mit den Spannmitteln 14 und mit ihrem anderen Ende mit der Seite der Vorrichtung 100 verbunden sind, die der Stirnseite 9 der Vorrichtung 100 d.h. der Seite der Vorrichtung 100, auf deren Bereich sich der Anschlag 13 befindet, gegenüberliegt.

Solange das Werkstück 10 noch nicht auf der Einspannauflage 11 aufliegt, befinden sich die Spannmittel 14 an dem bogenförmigen Ende der Spannmittelführungen 12, die dem Anschlag 13 gegenüberliegen, in einer Ruheposition. In der Ruheposition sind die Federelemente 15 unter Aufbau der Rückstellkraft maximal ausgelenkt. Um das Werkstück 10 auf der Einspannauflage 11 zu positionieren, werden die Spannmittel 14 freigegeben und bewegen sich unter der Einwirkung der Federkraft längs der Spannmittelführungen 12 in eine Spannposition. In der Spannposition legen sich die Spannmittel 14 an die Kontur des Werkstücks 10 an, sodass die Federelemente 15 sich teilweise entspannen und unter Federvorspannung an dem Werkstück zu liegen kommen. Hierbei speichern die Federelemente 15 Spannenergie in Form von potentieller Energie, deren Größe mit der Verkürzung oder der Verlängerung der Federelemente 15 steigt. Um eine zuverlässige Einspannung des Werkstückes 10 zu gewährleisten kann vorgesehen sein, dass die Federelemente 15 unter Dauervorspannung stehen, also mit einer vorgegebenen Kraft vorgespannt sind, die selbst dann anliegt, wenn die Spannmittel 14 sich in der dem Anschlag 13 nächstliegenden Stellung befinden.

In der in Fig. 1 dargestellten Ausführungsform liegen die Spannmittel 14 in der Spannposition aufgrund ihrer Zylinderform tangential an der Kontur des Werkstücks 10 an.

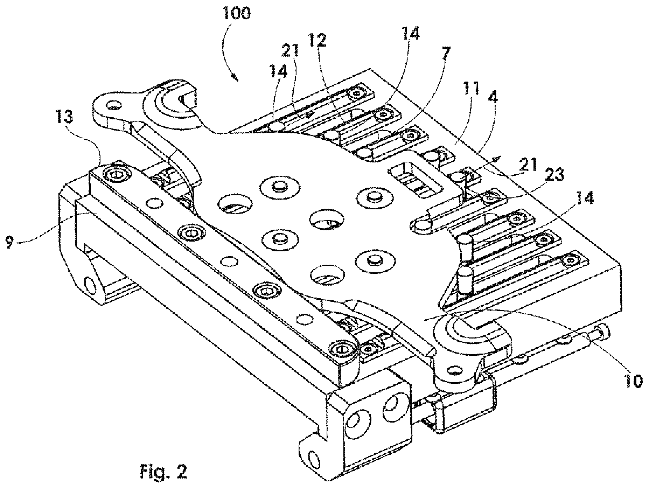

Fig. 2 zeigt eine weitere Variante der Anordnung der Federelemente 15 unterhalb der Einspannauflage 11 der Vorrichtung 100. Bei dieser Vorrichtung 100 sind als Zugfeder ausgebildete Federelemente 15 vorgesehen, die an einem ihrer Enden mit den Spannmitteln 14 und mit ihrem anderen Ende an der Stirnseite 9 der Vorrichtung 100 festgelegt sind. Auch bei dieser Vorrichtung 100 befinden sich die Spannmittel 14 an einem ersten, in Fig. 2 nicht gezeigten und unter dem Werkstück 10 befindlichen bogenförmigen Ende der Spannmittelführungen 12, die dem Anschlag 13 gegenüberliegen, in einer Ruheposition, solange das Werkstück 10 noch nicht auf der Einspannauflage 11 aufliegt. Die Spanmittelführung 12 wird durch ein zweites bogenförmiges Ende 7 begrenzt, das dem ersten in Fig. 2 nicht dargestellten bogenförmigen Ende gegenüberliegt und der gegenüberliegenden Seite 4, d.h. der Rückseite der Vorrichtung 100 zugewandt ist.

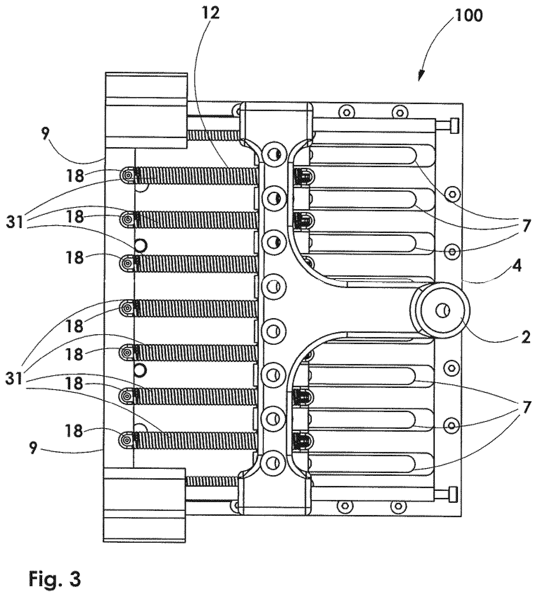

Dies veranschaulicht genauer Fig. 3, die eine mit Befestigungsmitteln 18 versehenen Rückseite der in Fig. 2 dargestellten Vorrichtung 100 zeigt. Die Federelemente 15 sind, wie aus Fig. 3 hervorgeht, zwischen der Stirnseite 9 der Vorrichtung 100 und den in Fig. 3 nicht sichtbaren Spannmitteln 14 angeordnet, d.h. auch mit der Stirnseite 9 und den Spannmitteln 14 fest verbunden.

Um das in Fig. 2 gezeigte Werkstück 10 auf der Einspannvorlage 11 zu positionieren, werden die Spannmittel 14 durch Einwirkung einer äußeren Kraft längs der Spannmittelführungen 12 verschoben, sodass die in Fig. 3 gezeigten Federelemente 15 auseinandergezogen, d.h. verlängert werden, was in Fig. 2 durch den Pfeil 21 veranschaulicht ist. Hierdurch speichern die in Fig. 3 gezeigten und als Zugfedern ausgebildeten Federelemente 15 potentielle Energie, deren Betrag mit der Verlängerung bzw. Verkürzung der Federelemente 15 steigt oder fällt. Das Werkstück 10 wird somit durch die daran anliegenden Spannmittel 12 gegen den Anschlag 13 gedrückt und so gegen Verschiebungen in der Ebene der Einspannauflage 11 gesichert. Auch bei der in Fig. 2 dargestellten Vorrichtung 100 legen sich die Spannmittel 14 in der Spannposition aufgrund ihrer runden Form tangential an die Kontur des Werkstücks 10 an.

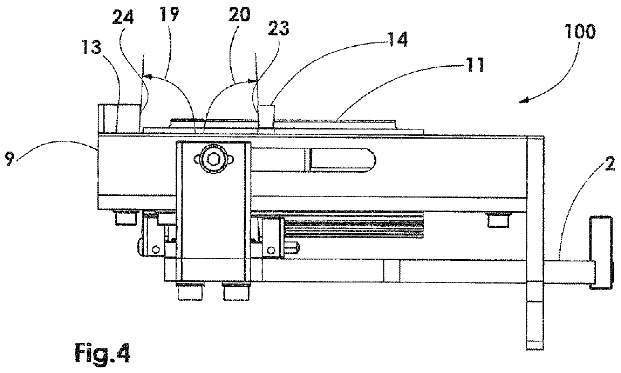

Um das Werkstück 10 stärker auf die Einspannauflage 11 zu spannen, ist die zum Anschlag 13 zugewandte Außenfläche des Spannmittels 14, wie Fig. 4 verdeutlicht, schräg ausgebildet ist. Bei der in Fig. 4 gezeigten Ausführungsform liegt noch kein Werkstück auf der Einspannauflage 11, d.h. das Spannmittel 14 befindet sich in einer Ruheposition. Der zwischen der schrägen Außenfläche des Spannmittels 12 und der Einspannauflage 11 eingeschlossene Winkel 20 beträgt ca. 87°.

Gegenüber den Spannmitteln 14 ist der Anschlag 13 angeordnet. Dieser weist eine den Spannmitteln 14 zugewandte schräge Außenfläche auf und schließt mit der Einspannauflage 11 einen Winkel 19 ein, der etwa 87° beträgt. Hierdurch wird das Werkstück 10 noch stärker auf die Einspannauflage 11 gespannt.

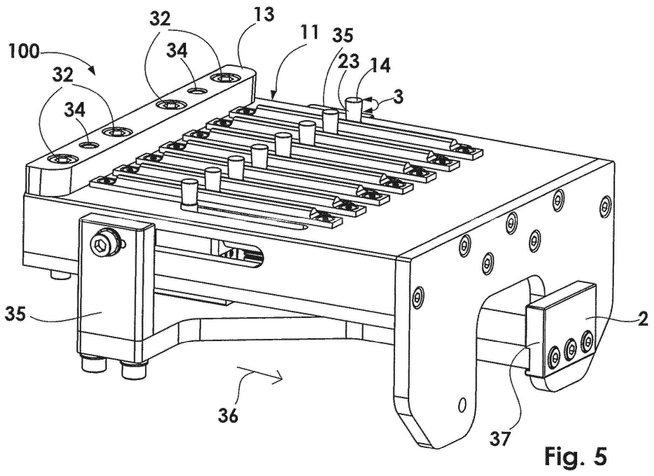

In der Fig. 5 ist die Vorrichtung 100 gemäß der dritten Ausführungsform in einer Perspektivansicht gezeigt. Die als Spannstifte ausgebildeten Spannmittel 14 sind auswechselbar an der Vorrichtung 100 vorgesehen und können vorliegend ausgetauscht werden. Die Spannmittel 14 sind dazu mit einer darunter liegenden, beweglichen Einheit verschraubt. Durch einfaches Angreifen an der Spannfläche 23 und Drehen an dem Spannmittel 14 kann dieses von der Vorrichtung 100 abgelöst und durch ein anderes Spannmittel 14 ersetzt werden.

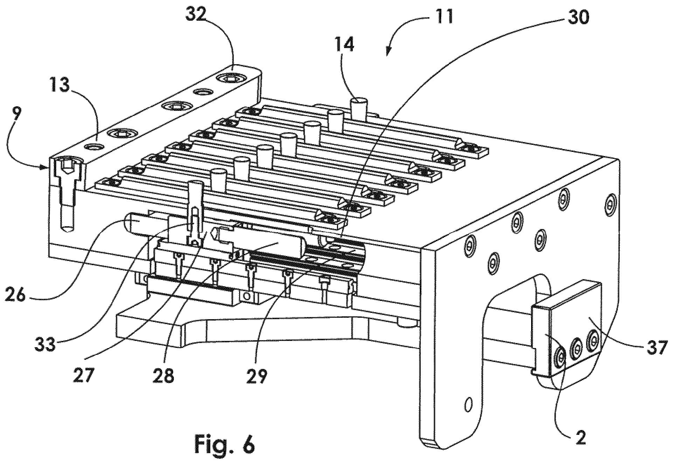

In der Fig. 6 ist eine Schnittansicht der Vorrichtung aus den Fig. 4 und 5 gezeigt, in welcher die unterhalb der Einspannauflage 11 liegende, bewegliche Einheit darstellt ist. Diese Einheit weist ein Verbindungsteil 27 mit einem Gewindebolzenfortsatz 33 auf, auf welchen das mit einem Innengewinde versehene Spannmittel 14 aufgeschraubt ist. Das Verbindungsteil 27 bildet einen Teil eines Führungswagens 26, der unterhalb der Einspannauflage 11 längsverschieblich in der Vorrichtung vorgesehen ist. Der Führungswagen 26 weist einen mit dem Verbindungsteil 27 verbundenen Innendorn 28 auf, der in ein in der Fig. 6 nicht gezeigtes Federelement 15 eintaucht. Das Federelement 15 wird in einer Einbauposition 30 innerhalb einer länglichen Führungstasche 29 positioniert. Durch den Innendorn 28 wird ein seitliches Wegknicken des Federelementes 15 bei Belastung vermindert bzw. nahezu vermieden.

Auf der Einspannauflage 11 ist stirnseitig der Anschlag 13 mittels Gewindebolzen 32 mit der Einspannauflage 11 verschraubt. Zusätzlich können an dem Anschlag 13 Bohrungen vorgesehen sein, in welche Stifte 34 zur Ausrichtung des Anschlags 13 mit der Einspannauflage 11 eingreifen.

Zum Zurücksetzen der Spannmittel 14 in die Ruheposition ist ein Auslöser 2 vorgesehen, welcher mit den Spannmitteln 14 gleichlaufend längsverschieblich an der Vorrichtung 100 vorgesehen ist. Der Auslöser 2 weist dabei zwei seitlich die Einspannauflage 11 umgreifende Backen 35 auf, zwischen denen ein in den Figuren nicht gezeigtes Rückholelement eingefügt ist, das an den Verbindungsteilen 27 der jeweiligen Spannmitteln 14 angreift, wenn die Rückholeinrichtung 25 in die Rückholrichtung 36 gezogen wird. Zur Einleitung einer Zugkraft in den Auslöser 2 ist eine Rückholbacke 37 vorgesehen, in welche eine Rückholeinrichtung 25 einer Bearbeitungsanlage 200 eingreifen kann, in welcher die Vorrichtung 100 verwendet wird.

Generell wird in den in Fig. 2 bis 6 dargestellten Auslöser 2 eine Zugkraft eingeleitet, um die Spannmittel 14 aus ihrer jeweiligen Spannposition zurückzuholen.

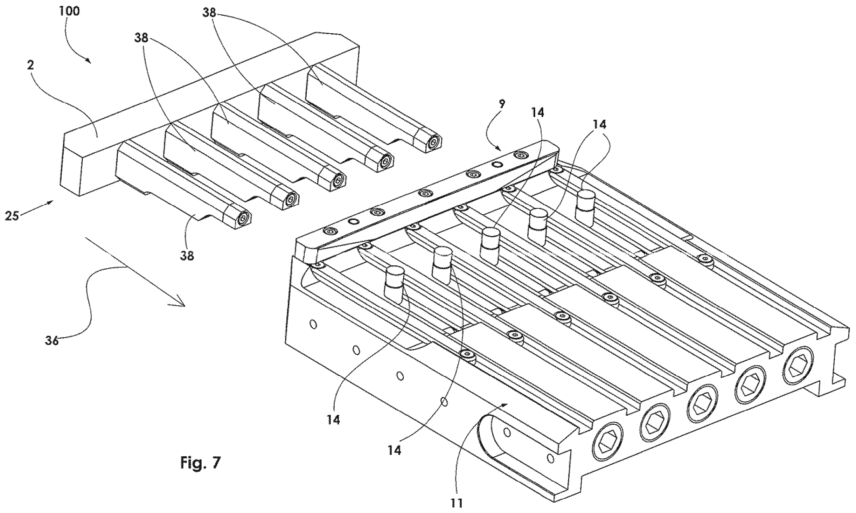

In der Fig. 7 ist eine vierte Ausführungsform der Vorrichtung 100 gezeigt, bei welcher der Auslöser 2 im Gegensatz zu den zuvor beschriebenen Ausführungsformen keine Zugkraft, sondern eine Druckkraft mittelbar oder unmittelbar auf die jeweiligen Spannmittel 14 ausübt, wenn er in Rückholrichtung 36 bewegt wird. Hierdurch werden die Spannmittel 14 aus ihrer jeweiligen Spannposition in die Ruheposition zurückgeholt. Dazu weist der in der Fig. 7 dargestellte Auslöser 2 mehrere Rückholfinger 38 auf, die an der Stirnseite 9 der Vorrichtung 100 an den jeweiligen Führungswagen 26 angreifen.

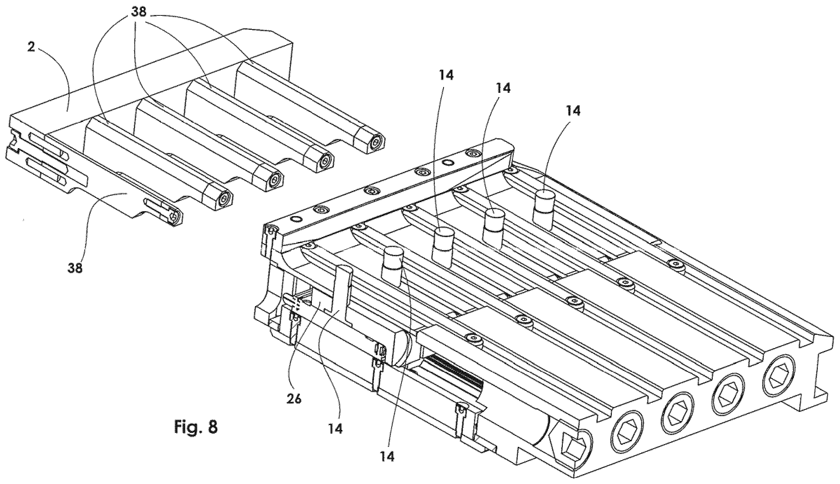

In der Fig. 8 ist eine Schnittansicht der Vorrichtung gemäß Fig. 7 gezeigt, in der das Zusammenspiel zwischen dem jeweiligen Finger 38 und dem zugehörigen Führungswagen 26 erkennbar ist.

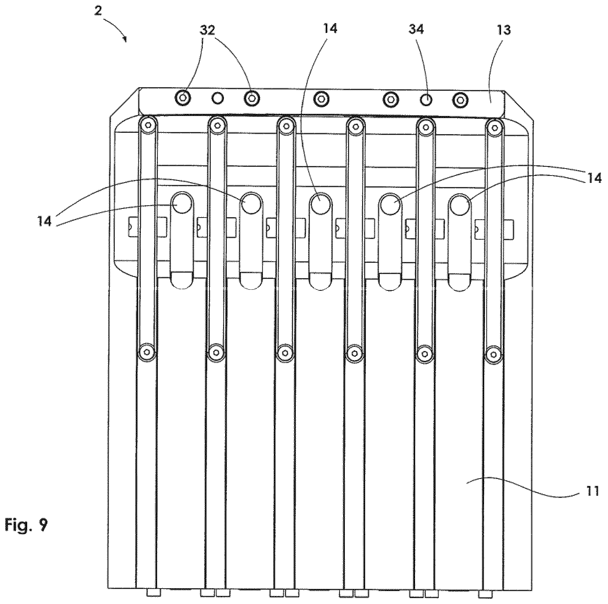

Wie in den Fig. 7 bis 9 erkennbar, kann gemäß der vierten Ausführungsform auf seitlich oder stirnseitig überstehende Abschnitte eines Auslösers 2 verzichtet werden. Vielmehr ist der Auslöser 2 Teil eines separat zu der Vorrichtung 100 ausgebildeten Rückholmechanismus 25, welcher nur bedarfsweise und an bestimmten Stellen ein Bearbeitungsanlage 200, beispielsweise vor oder nach Bearbeitungsstationen 201 angeordnet ist. Somit besteht die Vorrichtung gemäß der vierten Ausführungsform aus weniger Bauteilen als die übrigen Ausführungsformen.

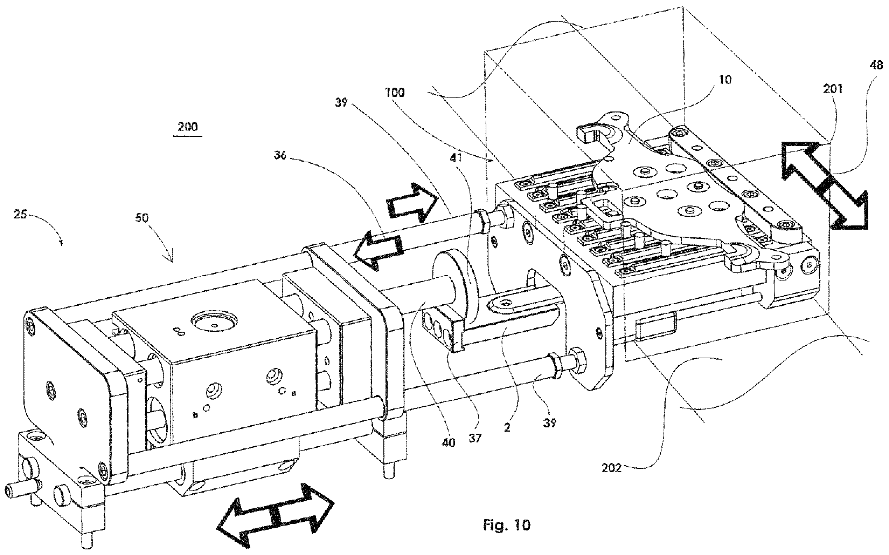

In der Fig. 10 ist die bereits zuvor erwähnte Bearbeitungsanlage 200 mit einer Bearbeitungsstation 201 schematisch dargestellt. Die Bearbeitungsstation 201 kann beispielsweise eine Schleifbearbeitungsstation sein, die Teil einer Produktionsstraße bildet. Die einzelnen Vorrichtungen 100 zur Fixierung von Werkstücken 10 für die Bearbeitung in den Bearbeitungsstationen 201 werden mittels einer Transporteinrichtung 202 zu den jeweiligen Bearbeitungsstationen 201 gefördert.

Im vorliegenden Beispiel gemäß Fig. 10 ist die Bearbeitungsstation 201 eine Entnahmestation, in welcher das fertiggestellte Werkstück 10, vorliegend eine Belagträgerplatte, aus der Vorrichtung 100 entnommen werden soll. Dazu muss die Fixierung des Werkstückes 10 gelöst werden, in dem die jeweiligen Spannmittel 14 aus ihrer jeweiligen Spannposition in die Ruheposition zurückgeholt werden, so dass das Werkstück 10 freigegeben wird.

Der Auslöser 2 der Vorrichtung 100 wird dazu mit Hilfe einer Rückholeinrichtung 25 in Form einer Betätigungsvorrichtung 49 in die Rückholrichtung 36 bewegt. Dies muss mit einer relativ großen Rückholkraft in Rückholrichtung 36 geschehen, die größer ist als die Summe der Federkräfte der einzelnen Federelemente 15. Die Rückholeinrichtung 25 weist Druckglieder 52 in Form von Stützstempeln 39 auf, die die Vorrichtung 100 gegen die über den Auslöser 2 als Zugkraft 53 eingeleitete Rückholkraft abstützen. An dem Auslöser 2 greift ein Rückholstempel 40 an, der mit einer tellerförmigen Aufweitung 41 die Rückholbacke 37 hintergreift. Der Rückholstempel 40 ist gleichzeitig ein Zugglied 51 der Betätigungsvorrichtung 49 und ist mit einem die Rückholkraft aufbringenden Aktuator 50 verbunden.

Wenn die Vorrichtung 100 mittels der Transporteinrichtung 202 in Transportrichtung 48 in die Bearbeitungsstation 201 gefahren wird, kommen die Rückholbacke 37 und die Aufweitung 41 in der Rückholrichtung 36 in Deckung, so dass ein einfaches Zurückziehen des Rückholstempels 40 in die Rückholrichtung 36 eine Mitnahme des Auslösers 2 bewirken.

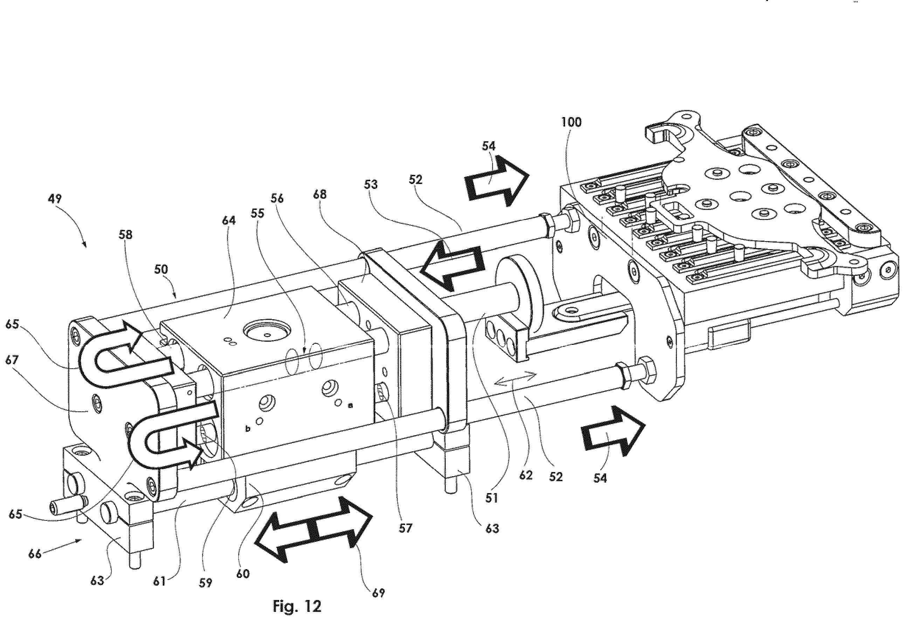

In der Fig. 12 ist die Betätigungsvorrichtung 49 dargestellt, die die in Fig. 10 dargestellte Rückholeinrichtung 25 bildet. Die Betätigungsvorrichtung 49 weist einen Aktuator 50 auf, der ein im vorliegenden ein Fall zentral angeordnetes Zugglied 51 und zwei bezogen auf das Zugglied 51, diametral gegenüberliegende Druckglieder 52 aufweist. Das Zugglied 51 dient zum Einleiten einer Zugkraft 53 in die Vorrichtung 100. Die Druckglieder 52 stützen in entgegengesetzter Richtung die Betätigungsvorrichtung 49 mit einer Druckkraft an der Vorrichtung 100 ab, so dass die Einleitung der Zugkraft 53 und der Druckkräfte 54 sich im Wesentlichen aufhebt. Hierdurch bleibt die Vorrichtung 100 im Wesentlichen außenreaktionskraftfrei.

Der Aktuator 50 weist mehrere Arbeitszylinder 55 auf, in denen mehrere Arbeitskolben 56, 58 verschieblich geführt sind. Dabei dienen im vorliegenden Fall die Arbeitskolben 56 zum Aufbringen der Zugkraft 53 auf die Vorrichtung 100 und die Arbeitskolben 58 zum Aufbringen der Druckkraft 54 auf die Vorrichtung 100. Im vorliegenden Fall sind die Arbeitskolben 56, 58 jeweils in demselben Arbeitszylinder 55 mit identischer Kolbenfläche 57, 59 geführt, so dass eine Beaufschlagung des Arbeitszylinders 55 mit einem definierten pneumatischen oder hydraulischen Druck zu einer gleichzeitigen Beaufschlagung der jeweiligen Arbeitskolben 56, 58 mit der gleichen Kraft erfolgt. Die Arbeitskolben 56, 58 bewegen sich dabei gegensinnig in den Arbeitszylinder 55 hinein, so dass je eine mit den Arbeitskolben 56, 58 verbundene Kraftübertragungsplatte 67, 68 sich zu dem dazwischen angeordneten Aktuatorgehäuse 64 hinbewegt. Die Kraftübertragungsplatten 67, 68 sind jeweils mit den Zug- bzw. Druckgliedern 51, 52 verbunden, so dass die auf die Kraftübertragungsplatte 67 ausgeübte Zugbewegung zu einer Bewegung des Druckglieds 52 in Richtung der Vorrichtung 100 führt. In diesem Sinne ist die Kraftübertragungsplatte 67 derart ausgebildet, dass die auf sie übertragene Zugkraft 65 in eine mit dem Druckglied 52 übertragene Druckkraft umgelenkt wird.

Der Aktuator 50 erzeugt somit eine Relativbewegung 62 zwischen dem Zugglied 51 und dem Druckglied 52, die mittels eines Doppelpfeils angedeutet ist. Bei der Ausführung dieser Relativbewegung 62 kommt es vor, dass das Zugglied 51 oder das Druckglied 52 zuerst an der Vorrichtung 100 zur Anlage kommt, so dass der Aktuator 50 eine Ausgleichsbewegung 69 ausführen muss, um eine einseitige Einleitung einer Zug- oder Druckkraft in die Vorrichtung 100 zu vermeiden. Dazu weist der Aktuator 50 einen Führungsschlitten 60 auf, der einen Teil des Aktuatorgehäuses 64 bildet oder damit verbunden ist. Der Führungsschlitten 60 ist auf Führungsschienen 61 linear beweglich gelagert und kann auf den Führungsschienen 61 zwischen endseitig montieren Klemmstücken 63 verfahren. Die Klemmstücke 63 bilden ein ortsfest vorgesehenes Fundament 66.

Der hier zum Erzeugen einer Linearbewegung ausgebildete Aktuator 50 kann alternativ auch als magnetisch betätigbarer oder elektromechanisch betätigbarer Aktuator ausgebildet sein. Beispielsweise können die Arbeitskolben 56, 58 mit zwei gleichartigen Elektromagneten, d. h. mit gleicher Windungszahl ausgestatteten Elektromagneten verbunden sein, die auf einen gemeinsamen Weicheisenkern bewegbar sind, so dass die Arbeitskolben 56, 58 dann als Aktuatorglieder die jeweilige Zug- oder Druckkraft aufbringen.

Auch kann der Aktuator 50 als elektromechanischer Spindeltrieb ausgebildet sein, wobei die Aktuatorglieder hier als gegensinnig gewundene Spindelstangen ausgebildet sein können, so dass ein zentral in dem Aktuatorgehäuse 56 angeordneter Motor eine gegensinnige Bewegung an den Spindelabgriffen erzeugt.

Bei allen Varianten der Aktuatoren kann vorgesehen sein, dass diese doppelwirkend, also zum Erzeugen sowohl von Zug- als auch von entgegengesetzten Druckkräften in beiden Richtungen wechselweise ausgebildet sind, so dass nicht nur eine im Zusammenhang mit der hier beschriebenen Vorrichtung 100 erforderliche Rückholbewegung für die Spannmittel 14, sondern auch eine entgegengesetzte Betätigung erfolgen kann.

Insgesamt kann die Betätigungsvorrichtung 49 zum außenreaktionskraftfreien oder außenreaktionskraftarmen Einleiten von Zug- bzw. Druckkräften in andere Vorrichtungen für eine Vielzahl unterschiedlicher Anwendungen verwendet werden. Als besonders vorteilhaft hat sich die Betätigungsvorrichtung 49 für die Anwendung bei der Bremsbelag-Herstellung erwiesen.

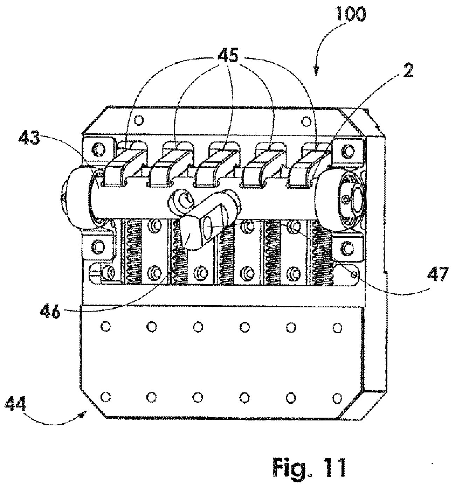

Schließlich wird in der Fig. 11 die perspektivische Unteransicht der Vorrichtung 100 gemäß einer Variante nach der ersten Ausführungsform gemäß Figur 1 gezeigt, bei welcher der Auslöser 2 kurbelwellenartig ausgebildet ist. Hierbei ist eine drehbare Welle 43 an der der Einspannauflage 11 gegenüberliegenden Unterseite 44 der Vorrichtung 100 vorgesehen, welche mit jeweils einem Pleuel 45 an dem jeweiligen Führungswagen 26 des jeweiligen Spannmittels 14 angreift. Ein Betätigungshebel 46 ist drehfest mit der Welle 43 verbunden und weist eine Verbindungsbohrung 47 auf, mittels welcher er mit einem Aktuator 50 verbindbar ist. Die vorliegende Ausgestaltung des Auslösers 2 ermöglicht es, eine Unter- bzw. Übersetzung der Rückholbewegung gegenüber der Spannmittel 14 aus ihrer jeweiligen Spannposition heraus zu bewirken, so dass bei Bedarf entweder mit kleinen Betätigungshüben für die Rückholeinrichtung 25 oder kleinen Rückholkräften die Fixierung gelöst werden kann.

**Bezugszeichenliste**

| | | | |
|---|---|---|---|
| 1 | Bremsbelag | 32 | Gewindebolzen |
| 2 | Rückholeinrichtung | 33 | Gewindebolzenfortsatz |
| 3 | Drehrichtung | 34 | Stift |
| 4 | gegenüberliegende Seite | 35 | Backe |
| 5 | Reibbelag | 36 | Rückholrichtung |
| 6 | Trägerplatte | 37 | Rückholbacke |
| 7 | bogenförmiges Ende | 38 | Rückholfinger |
| 8 | bogenförmiges Ende | 39 | Stützstempel |
| 9 | Stirnseite | 40 | Rückholstempel |
| 10 | Werkstück | 41 | Aufweitung |
| 11 | Einspannauflage | 43 | Welle |
| 12 | Spannmittelführung | 44 | Unterseite |
| 13 | Anschlag | 45 | Pleuel |
| 14 | Spannmittel | 46 | Betätigungshebel |
| 15 | Federelement | 47 | Verbindungsbohrung |
| 16 | bogenförmiges Seitenteil | 48 | Transportrichtung |
| 17 | bogenförmiges Seitenteil | 49 | Betätigungsvorrichtung |
| 18 | Befestigungsmittel | 50 | Aktuator |
| 19 | Winkel | 51 | Zugglied |
| 20 | Winkel | 52 | Druckglied |
| 21 | Pfeil | 53 | Zugkraft |
| 22 | Werkstückkontur | 54 | Druckkraft |
| 23 | Spannfläche | 55 | Arbeitszylinder |
| 24 | Anschlagsfläche | 56 | Arbeitskolben, Zugkraft |
| 25 | Rückholeinrichtung | 57 | Kolbenfläche |
| 26 | Führungswagen | 58 | Arbeitskolben, Druckkraft |
| 27 | Verbindungsteil | 59 | Kolbenfläche |
| 28 | Innendorn | 60 | Führungsschlitten |
| 29 | Führungstasche | 61 | Führungsschiene |
| 30 | Einbauposition | 62 | Relativbewegung |
| 31 | Federelement | 63 | Klemmstück |
| 64 | Aktuatorgehäuse | 100 | Vorrichtung |
| 65 | Zugkraft | | |
| 66 | Fundament | 200 | Bearbeitungsanlage |
| 67 | Kraftübertragungsplatte | 201 | Bearbeitungsstation |
| 68 | Kraftübertragungsplatte | 202 | Transporteinrichtung |
| 69 | Ausgleichsbewegung | | |

## Patentansprüche

1. Betätigungsvorrichtung (49) zum Einleiten einer Zugkraft (53) und einer zur Zugkraft (53) entgegengesetzten Druckkraft (54) in eine Vorrichtung (100), mit wenigstens einem Zugglied (51) zum Übertragen der Zugkraft (53) auf die Vorrichtung (100) und wenigstens einem Druckglied (52) zum Übertragen der Druckkraft (54) auf die Vorrichtung (100), und mit einem Fundament (66), wobei das wenigstens eine Zugglied (51) und das wenigstens eine Druckglied (52) zur Erzeugung einer Relativbewegung (62) des Zugglieds (51) und des Druckgliedes (52), die der Bewegung des Zuggliedes (51) und des Druckgliedes (52) in entgegengesetzten Richtungen entspricht, über einen dazwischen schwimmend gelagerten Aktuator (50) wirkverbunden sind, und wobei der Aktuator (50) zum Erreichen der schwimmenden Lagerung gegenüber dem Fundament (66) linear verschieblich geführt ist, wobei das Fundament (66) ortsfest gegenüber der Vorrichtung (100) festgelegt ist, in die die Zug- bzw. Druckkraft eingeleitet werden soll, und wobei der Aktuator (50) mittels eines daran ausgebildeten oder damit verbundenen Führungschlittens (60) an einer Führungsschiene (61) des Fundamentes (66) gelagert ist, und wobei der Aktuator (50) nach wenigstens einem der folgenden Funktionsprinzipien betätigbar ist: pneumatisch, hydraulisch, magnetisch oder elektromechanisch, und wobei der Aktuator (50) mit wenigstens zwei gegenläufig in einem Aktuatorgehäuse (64) beweglichen Aktuatorgliedern ausgebildet ist, wobei das eine Aktuatorglied mit dem wenigstens einen Zugglied (51) und das andere Aktuatorglied mit dem wenigstens einen Druckglied (52) gekoppelt ist.

2. Betätigungsvorrichtung (49) nach Anspruch 1, **dadurch gekennzeichnet, dass** der Aktuator (50) zum Erzeugen einer linearen Bewegung ausgebildet ist.

3. Betätigungsvorrichtung (49) nach einem der vorhergehenden Ansprüche,
**dadurch gekennzeichnet, dass** das wenigstens eine Zugglied (51) und das wenigstens eine Druckglied (52) parallel verschieblich zueinander geführt sind.

4. Betätigungsvorrichtung (49) nach einem der Ansprüche 1 bis 3, **dadurch gekennzeichnet, dass** wenn der Aktuator (50) pneumatisch oder hydraulisch betätigbar ist, dieser wenigstens einen Arbeitszylinder (55) und wenigstens einen darin hydraulisch oder pneumatisch verschieblichen Arbeitskolben (56) zum Erzeugen einer auf das wenigstens eine Zugglied (51) und das wenigstens eine Druckglied (52) wirkenden Relativbewegung (62) aufweist.

5. Betätigungsvorrichtung (49) nach den Ansprüchen 3 und 4, **dadurch gekennzeichnet, dass** die wenigstens zwei gegenläufig in dem Aktuatorgehäuse (64) beweglichen Aktuatorglieder als Arbeitskolben (56, 58) ausgebildet sind, die beweglich in dem als Arbeitszylinder (55) ausgebildeten oder den wenigstens einen Arbeitszylinder (55) aufweisenden Aktuatorgehäuse (64) geführt sind, wobei der eine Arbeitskolben (56) mit dem wenigstens einen Zugglied (51) und der andere Arbeitskolben (58) mit dem wenigstens einen Druckglied (52) gekoppelt ist.

6. Betätigungsvorrichtung (49) nach einem der Ansprüche 1 bis 5, **dadurch gekennzeichnet, dass** bei einem hydraulisch oder pneumatisch betätigbaren Aktuator (50) eine hydraulisch oder pneumatisch wirksame Kolbenfläche (57) zur Erzeugung der Zugkraft (53) im Wesentlichen einer hydraulisch oder pneumatisch wirksamen Kolbenfläche (59) zur Erzeugung der Druckkraft (54) entspricht.

7. Betätigungsvorrichtung (49) nach einem der Ansprüche 1 bis 6, **dadurch gekennzeichnet, dass** der Aktuator (50) zur Erzeugung entgegengesetzter Relativbewegungen (62) zwischen dem wenigstens einen Zugglied (51) und dem wenigstens einen Druckglied (52) doppeltwirkend oder mit wenigstens einer Rückzugsfeder ausgebildet ist.

8. Betätigungsvorrichtung (49) nach einem der vorhergehenden Ansprüche,
**dadurch gekennzeichnet, dass** das wenigstens eine Zugglied (51) ferner zum Übertragen einer Druckkraft (54) und/oder das wenigstens eine Druckglied (52) ferner zum Übertragen einer Zugkraft (53) ausgebildet ist.

9. Betätigungsvorrichtung (49) nach einem der Ansprüche 1 bis 7, **dadurch gekennzeichnet, dass**
a. wenigstens zwei Zugglieder (51) vorgesehen sind, die sich bezogen auf das wenigstens eine Druckglied (52) diametral gegenüberliegen, oder dass
b. wenigstens zwei Druckglieder (52) vorgesehen sind, die sich bezogen auf das wenigstens eine Zugglied (51) diametral gegenüberliegen oder, dass
c. wenigstens zwei Zugglieder (51) und wenigstens zwei Druckglieder (52) vorgesehen sind, die symmetrisch zueinander angeordnet sind derart, dass die Einleitung der Zug- und Druckkräfte (53, 54) im Wesentlichen Momentfrei erfolgt.

10. Bearbeitungsanlage (200) mit einer Betätigungsvorrichtung (49) nach einem der vorhergehenden Ansprüche sowie einer Vorrichtung (100) zum Fixieren von Werkstücken (10) für eine mechanische Bearbeitung.

11. Bearbeitungsanlage (200) nach Anspruch 10, **dadurch gekennzeichnet, dass** wenigstens eine Bearbeitungsstation (201) zum mechanischen Bearbeiten eines in der Vorrichtung (100) gehaltenen Werkstücks (10) vorgesehen ist, in die die Vorrichtung (100) mittels einer Transporteinrichtung (202) zu- und abführbar ist.

12. Bearbeitungsanlage (200) nach einem der Ansprüche 10 oder 11, **dadurch gekennzeichnet, dass** die Bearbeitungsanlage (200) eine Rückholeinrichtung (25) für ein Verschieben von Spannmitteln (14) der Vorrichtung (100) in eine Ruheposition aufweist, wobei die Rückholeinrichtung (25) durch die Betätigungsvorrichtung (49) nach einem der Ansprüche 1 bis 9 gebildet ist.

## Claims

1. Activating device (49) for introducing a tensile force (53) and a compression force (54) opposing the tensile force (53) into a device (100), having at least one traction member (51) for transmitting the tensile force (53) to the device (100) and at least one compression member (52) for transmitting the compression force (54) to the device (100), and having a base (66), wherein the at least one traction member (51) and the at least one compression member (52) for generating a relative movement (62) between the traction member (51) and the compression member (52), corresponding to the movement of the traction member (51) and the compression member (52) in opposite directions, are operatively connected by way of a floating actuator (50) mounted therebetween, and wherein the actuator (50) for achieving the floating mounting is guided so as to be displaceable linearly relative to the base (66), wherein the base (66) is fixed so as to be stationary relative to the device (100) into which the tensile force or compression force is to be introduced, and wherein the actuator (50) by means of a guide slide (60) formed thereon or connected thereto is mounted on a guide rail (61) of the base (66), and wherein the actuator (50) is activatable according to at least one of the following functional principles: pneumatically, hydraulically, magnetically or electro-mechanically, and wherein the actuator (50) is formed with at least two actuator members which are movable in opposite directions in an actuator housing (64), wherein the one actuator member is coupled to the at least one traction member (51) and the other actuator member is coupled to the at least one compression member (52).

2. Activating device (49) according to Claim 1, **characterized in that** the actuator (50) is designed to generate a linear movement.

3. Activating device (49) according to one of the preceding claims, **characterized in that** the at least one traction member (51) and the at least one compression member (52) are guided so as to be mutually displaceable in parallel.

4. Activating device (49) according to one of Claims 1 to 3, **characterized in that** when the actuator (50) is activatable pneumatically or hydraulically, the latter has at least one working cylinder (55) and at least one working piston (56), which is hydraulically or pneumatically displaceable therein, for generating a relative movement (62) acting on the at least one traction member (51) and the at least one compression member (52).

5. Activating device (49) according to Claims 3 and 4, **characterized in that** the at least two actuator members which are movable in opposite directions in the actuator housing (64) are designed as working pistons (56, 58) which are guided so as to be movable in the actuator housing (64) designed as a working cylinder (55) or comprising the at least one working cylinder (55), wherein the one working piston (56) is coupled to the at least one traction member (51), and the other working piston (58) is coupled to the at least one compression member (52).

6. Activating device (49) according to one of Claims 1 to 5, **characterized in that** in the case of a hydraulically or pneumatically activatable actuator (50), a hydraulically or pneumatically effective piston surface (57) for generating the tensile force (53) corresponds substantially to a hydraulically or pneumatically effective piston surface (59) for generating the compression force (54).

7. Activating device (49) according to one of Claims 1 to 6, **characterized in that** the actuator (50) for generating opposite relative movements (62) between the at least one traction member (51) and the at least one compression member (52) is designed so as to be dual-action, or so as to have at least one restoring spring.

8. Activating device (49) according to one of the preceding claims, **characterized in that** the at least one traction member (51) is furthermore designed to transmit a compression force (54), and/or the at least one compression member (52) is furthermore designed to transmit a tensile force (53).

9. Activating device (49) according to one of Claims 1 to 7, **characterized in that**
a. provided are at least two traction members (51) which are diametrically opposite in terms of the at least one compression member (52), or **in that**
b. provided are at least two compression members (52) which are diametrically opposite in terms of the at least one traction member (51), or **in that**
c. provided are at least two traction members (51) and at least two compression members (52) which are disposed so as to be mutually symmetrical in such a manner that the introduction of the tensile and compression forces (53, 54) takes place substantially without a momentum.

10. Machining system (200) having an activating device (49) according to one of the preceding claims and a device (100) for fixing workpieces (10) for mechanical machining.

11. Machining system (200) according to Claim 10, **characterized in that** provided is at least one machining station (201) for the mechanical machining of a workpiece (10) held in the device (100), into which the device (100) is able to be fed and discharged by means of a transport device (202).

12. Machining system (200) according to one of Claims 10 or 11, **characterized in that** the machining system (200) has a restoring device (25) for displacing clamping means (14) of the device (100) to a resting position, wherein the restoring device (25) is formed by the activating device (49) according to one of Claims 1 to 9.

## Revendications

1. Dispositif d'actionnement (49) permettant d'introduire une force de traction (53) et une force de compression (54) opposée à la force de traction (53) dans un dispositif (100), comportant au moins un organe de traction (51) permettant de transmettre la force de traction (53) au dispositif (100) et au moins un organe de compression (52) permettant de transmettre la force de compression (54) au dispositif (100), et comportant un bâti (66), dans lequel l'au moins un organe de traction (51) et l'au moins un organe de compression (52), pour produire un mouvement relatif (62) de l'organe de traction (51) et de l'organe de compression (52) qui correspond au mouvement de l'organe de traction (51) et de l'organe de compression (52) dans des sens opposés, sont reliés fonctionnellement par le biais d'un actionneur (50) monté flottant entre ceux-ci, et dans lequel l'actionneur (50) est guidé de façon déplaçable linéairement par rapport au bâti (66) pour obtenir le montage flottant, dans lequel le bâti (66) est fixé à demeure par rapport au dispositif (100) dans lequel la force de traction ou de compression doit être introduite, et dans lequel l'actionneur (50) est, au moyen d'un chariot de guidage (60) réalisé sur celui-ci ou relié à celui-ci, monté sur un rail de guidage (61) du bâti (66), et dans lequel l'actionneur (50) peut être actionné selon au moins l'un des principes de fonctionnement suivants : de façon pneumatique, de façon hydraulique, de façon magnétique ou de façon électromagnétique, et dans lequel l'actionneur (50) est pourvu d'au moins deux organes d'actionneur mobiles en sens contraires dans un boîtier d'actionneur (64), dans lequel l'un des organes d'actionneur est accouplé à l'au moins un organe de traction (51) et l'autre organe d'actionneur est accouplé à l'au moins un organe de compression (52).

2. Dispositif d'actionnement (49) selon la revendication 1, **caractérisé en ce que** l'actionneur (50) est réalisé pour produire un mouvement linéaire.

3. Dispositif d'actionnement (49) selon l'une des revendications précédentes, **caractérisé en ce que** l'au moins un organe de traction (51) et l'au moins organe de compression (52) sont guidés de façon déplaçable l'un par rapport à l'autre parallèlement.

4. Dispositif d'actionnement (49) selon l'une des revendications 1 à 3, **caractérisé en ce que** lorsque l'actionneur (50) peut être actionné de façon pneumatique ou hydraulique, celui-ci présente au moins un cylindre de travail (55) et au moins un piston de travail (56) déplaçable de façon hydraulique ou pneumatique dans celui-ci pour produire un mouvement relatif (62) agissant sur l'au moins un organe de traction (51) et l'au moins un organe de compression (52).

5. Dispositif d'actionnement (49) selon les revendications 3 et 4, **caractérisé en ce que** les au moins deux organes d'actionneur mobiles en sens contraires dans le boîtier d'actionneur (64) sont réalisés sous forme de pistons de travail (56, 58) qui sont guidés de façon mobile dans le boîtier d'actionneur (64) réalisé sous forme de cylindre de travail (55) ou présentant l'au moins un cylindre de travail (55), dans lequel l'un des pistons de travail (56) est accouplé à l'au moins un organe de traction (51) et l'autre piston de travail (58) est accouplé à l'au moins un organe de compression (52).

6. Dispositif d'actionnement (49) selon l'une des revendications 1 à 5, **caractérisé en ce que**, dans le cas d'un actionneur (50) pouvant être actionné de façon hydraulique ou pneumatique, une surface de piston (57) agissant de façon hydraulique ou pneumatique pour la production de la force de traction (53) correspond sensiblement à une surface de piston (59) agissant de façon hydraulique ou pneumatique pour la production de la force de compression (54).

7. Dispositif d'actionnement (49) selon l'une des revendications 1 à 6, **caractérisé en ce que** l'actionneur (50) pour produire des mouvements relatifs (62) opposés entre l'au moins un organe de traction (51) et l'au moins un organe de compression (52) est à double action ou est pourvu d'au moins un ressort de rappel.

8. Dispositif d'actionnement (49) selon l'une des revendications précédentes, **caractérisé en ce que** l'au moins un organe de traction (51) est réalisé en outre pour transmettre une force de compression (54) et/ou l'au moins un organe de compression (52) est réalisé en outre pour transmettre une force de traction (53).

9. Dispositif d'actionnement (49) selon l'une des revendications 1 à 7, **caractérisé en ce que**
a. au moins deux organes de traction (51) sont prévus, lesquels sont diamétralement opposés par rapport à l'au moins un organe de compression (52), ou **en ce que**
b. au moins deux organes de compression (52) sont prévus, lesquels sont diamétralement opposés par rapport à l'au moins un organe de traction (51), ou **en ce que**
c. au moins deux organes de traction (51) et au moins deux organes de compression (52) sont prévus, lesquels sont disposés de façon symétrique les uns par rapport aux autres de telle sorte que l'introduction des forces de traction et de compression (53, 54) s'effectue sensiblement sans couple.

10. Installation d'usinage (200) comportant un dispositif d'actionnement (49) selon l'une des revendications précédentes ainsi qu'un dispositif (100) permettant de fixer des pièces (10) pour un usinage mécanique.

11. Installation d'usinage (200) selon la revendication 10, **caractérisée en ce qu'**au moins un poste d'usinage (201) est prévu pour l'usinage mécanique d'une pièce (10) maintenue dans le dispositif (100), poste dans lequel le dispositif (100) peut être amené et duquel il peut être évacué au moyen d'un dispositif de transport (202).

12. Installation d'usinage (200) selon l'une des revendications 10 ou 11, **caractérisée en ce que** l'installation d'usinage (200) présente un dispositif de rappel (25) pour un déplacement de moyens de serrage (14) du dispositif (100) dans une position de repos, dans laquelle le dispositif de rappel (25) est formé par le dispositif d'actionnement (49) selon l'une des revendications 1 à 9.
